# EUROPÄISCHE PATENTSCHRIFT

(11) **EP 2 116 129 B1**
(45) Veröffentlichungstag und Bekanntmachung des Hinweises auf die Patenterteilung: **15.06.2011**
(21) Anmeldenummer: 08155623.5
(22) Anmeldetag: 05.05.2008
(51) Int. Cl.: A01G 25/02, B29C 47/02

(54) **Verfahren zum Herstellen von Tropfbewässerungsrohren**
Method for manufacturing irrigation drip tubes
Procédé de fabrication de tuyaux d'irrigation goutte à goutte

(43) Veröffentlichungstag der Anmeldung: 11.11.2009
(73) Patentinhaber: THE Machines Yvonand SA, 1462 Yvonand (CH)
(72) Erfinder: Guichard, Jean-Pierre, 1413, Orzens (CH); Vagnières, Jean-Luc, 1446, Baulmes (CH); Kertscher, Eberhard, 1462, Yvonand (CH)
(74) Vertreter: Scheuzger, Beat Otto

(56) Entgegenhaltungen:
- WO-A-99/62691

## Beschreibung

Die vorliegende Erfindung bezieht sich auf ein Verfahren zum Herstellen von Tropfbewässerungsrohren, bei welchem ein Rohrkörper durch einen Extrusionsvorgang eines thermoplastischen Kunststoffs hergestellt wird, welcher Rohrkörper kalibriert und abgekühlt wird und in welchen Rohrkörper Dosierelemente mit einem Abstand voneinander eingesetzt, an die Wandung des Rohrkörpers angepresst und mit dieser verschweisst werden, und welcher Rohrkörper durch eine Bohreinrichtung geführt wird, in welcher im Bereich der Dosierelemente jeweils die Wandung durchbohrt wird, wobei der aus der Extrusionsvorrichtung austretende extrudierte Rohrkörper in eine Vorkühlkammer geleitet wird, in welcher der Rohrkörper vorgekühlt wird und in welchem die Dosierelemente mit der Wandung verbunden und vollständig angepresst werden, und der Rohrkörper durch eine Kalibriervorrichtung geleitet und auf den Enddurchmesser kalibriert wird und in die Hauptkühlkammer gelangt, in welcher der Rohrkörper weiter abgekühlt wird.

Derartige Tropfbewässerungsrohre werden insbesondere zur direkten Bewässerung von Pflanzen verwendet. Hierzu können in diesen Tropfbewässerungsrohren im Bereich der Pflanzen ein oder mehrere Dosierelemente angeordnet sein, mittels welchem ermöglicht wird, dass das Wasser durch eine in der Wandung des Rohres angebrachte Bohrung tröpfchenweise austreten kann. Mit derartigen Tropfbewässerungsrohren kann das Wasser sehr sparsam und effizient eingesetzt werden.

Die Herstellung derartiger Rohre erfolgt in bekannter Weise, wie dies beispielsweise in der EP-A 0970602 dargestellt ist, dadurch, dass ein Rohrkörper durch eine Extrusionsvorrichtung extrudiert wird. Dieser extrudierte Rohrkörper wird auf den gewünschten Durchmesser kalibriert und gekühlt. In den Rohrkörper eingeschoben werden die Dosierelemente, die an die Wandung des Rohrkörpers angepresst und mit diesen verschweisst werden. Der mit diesen Dosierelementen versehene Rohrkörper wird durch eine Bohreinrichtung geführt, in welcher in die Wandung eine durchgehende Bohrung angebracht wird, durch welche das Wasser, dosiert durch das Dosierelement, tröpfchenweise austreten kann. Danach kann der Rohrkörper beispielsweise auf einer Wickelvorrichtung aufgewickelt werden.

Der wesentliche Vorgang bei derartigen Herstellungsverfahren für Tropfbewässerungsrohre ist das Anbringen und Verschweissen der Dosierelemente mit der Wandung des Rohrkörpers bei grosser Produktionsgeschwindigkeit. Beim vorgängig beschriebenen Verfahren besteht das Risiko, dass der Reibungswiderstand des Rohrkörpers in der Kalibriervorrichtung zu einer Dehnung des noch nicht abgekühlten Kunstoffes und somit zu einer Orientierung der Molekülketten führt. Dies kann zur Folge haben, dass das so gefertigte Rohr nicht die gewünschte Dehnbarkeit erreicht. Ferner besteht das Risiko, dass der Rohrkörper sich zu stark abkühlt, bis die Dosierelemente mit der Wandung des Rohrkörpers in Kontakt gebracht und mit diesem verschweisst werden. Dies kann zur Folge haben, dass die Verbindungsstelle zwischen Dosierkörper und Wandung des Rohrkörpers nicht optimal ist und zu einer Leckage führen kann, was die Qualität des Tropfbewässerungsrohres beinträchtigen kann.

Aus der Veröffentlichung WO99/62691A1 ist eine Einrichtung bekannt, bei welcher die Dosierelemente in einer in einer Vorkühlkammer angeordneten Vorkalibriereinrichtung mit dem extrudierten Rohrkörper verbunden werden, welcher Rohrkörper dann in einer weiteren Kalibriereinrichtung kalibriert wird. Mit dieser Einrichtung werden die vorgenannten Nachteile nicht ausgeräumt.

Die Aufgabe der vorliegenden Erfindung besteht somit darin, ein Verfahren zum Herstellen von Tropfbewässerungsrohren zu schaffen, bei welchem die vorgenannten Nachteile vermieden werden können und mit welchem eine optimale Verbindung der Dosierelemente mit der Wandung des Rohrkörpers erreicht werden kann, weitgehend unabhängig von der Dicke der Wandung der herzustellenden Tropfbewässerungsrohre.

Erfindungsgemäss erfolgt die Lösung dieser Aufgabe dadurch, dass der aus der Extrusionsvorrichtung austretende extrudierte Rohrkörper direkt, unkalibriert und kontaktlos durch die Eintrittsöffnung in die Vorkühlkammer eingeführt wird.

Mit diesem erfindungsgemässen Verfahren wird eine optimale Verbindung zwischen Dosierelementen und Wandung des Rohrkörpers erhalten, da der Ort, wo die Verbindung ausgeführt wird, sich nahe der Stelle befindet, wo das extrudierte Rohr die Extrusionsdüse verlässt. Das Material hat sich noch nicht so stark abgekühlt und weist noch eine relativ grosse Weichheit auf, was die Qualität der Verbindung zwischen den Dosierelementen und der Wandung dieses Rohrkörpers verbessert. Da die Kalibrierung des Rohrkörpers erst erfolgt, nachdem das Dosierelement vollumfänglich mit der Wandung des Rohrkörpers verbunden ist und der Rohrkörper durch die Vorkühlung entsprechend abgekühlt ist und eine gewisse Festigkeit aufweist, werden die Molekülketten nur noch im beschränkten Masse ausgerichtet, die Elastizität des fertiggestellten Tropfbewässerungsrohres im gewünschten Masse ist gewährleistet.

In vorteilhafter Weise werden die Dosierelemente über eine Führungsbahn in den Rohrkörper eingeführt und werden die Dosierelemente durch den Endbereich der Führungsbahn und eine die Aussenseite der Wandung abstützende Rolle an die Wandung des Rohrkörpers angepresst, wodurch ein geringer Widerstand entsteht.

Eine weitere vorteilhafte Ausgestaltung der Erfindung besteht darin, dass durch Einstellen des Abstandes zwischen dem Endbereich der Führungsbahn und der abstützenden Rolle die Eindringtiefe des Dosierelementes in die Wandung des Rohrkörpers festgelegt wird. Durch diese Einstellung des Abstandes kann die Eindringtiefe der Dosierelemente in die Wandung des Rohrkörpers festgelegt werden, das Risiko, dass die Dosierelemente zu stark an die Wandung des Rohrkörpers angepresst werden und somit die Wandung beschädigen können, wie dies bei Einstellen des Anpressdrucks auftreten könnte, wird dadurch vermieden.

In vorteilhafterweise wird die Eindringtiefe des Dosierelementes in die Wandung des Rohrkörpers auf 2% bis 50% der Dicke der Wandung festgelegt, wodurch unterschiedlichen Wanddicken von Rohrkörpern Rechnung getragen werden kann.

In der Vorkühlkammer kann das Kühlmittel auf den Rohrkörper aufgesprüht werden, das Kühlmittel kann in der Vorkühlkammer aber auch ein Bad bilden , welches durch den Rohrkörper durchlaufen wird, wodurch die für den jeweiligen Vorgang optimale Lösung gewählt werden kann.

Aus der Eintrittsöffnung der Vorkühlkammer kann Kühlmittel austreten, da in diesem Bereich zwischen der Wand der Vorkühlkammer, in welcher die Eintrittsöffnung angebracht ist, und dem Rohrkörper kein Kontakt auftritt, und lediglich eine Lippendichtung angebracht sein kann, welches vorteilhafterweise durch ein Auffangbecken aufgefangen wird.

In vorteilhafter Weise wird die die Aussenseite der Wandung abstützende Rolle angetrieben, wodurch der Widerstand auf den fortlaufenden Rohrkörper möglichst gering gehalten wird.

In vorteilhafter Weise herrscht in der Vorkühlkammer Umgebungsdruck, was deren Aufbau vereinfacht, während in der Hauptkühlkammer ein Unterdruck angelegt wird, durch welchen erreicht wird, dass der Rohrkörper nicht zusammen fällt.

Das erfindungsgemässe Verfahren wird nachfolgend an Hand der beiliegenden Zeichnung beispielhaft näher erläutert.

Es zeigt
Fig. 1 in einer schematischen Schnittdarstellung den Extrusionsbereich, die Zuführung der Dosierelemente, die Vorkühlkammer und die Hauptkühlkammer einer Einrichtung zur Herstellung von Tropfbewässerungsrohren;
Fig. 2 in einer schematischen vergrösserten Schnittdarstellung die Extrusionsvorrichtung, die Zuführeinrichtung für die Dosierelemente und die Vorkühlkammer der Einrichtung gemäss Figur 1;
Fig. 3 in einer schematischen Schnittdarstellung eine Draufsicht auf die Vorkühlkammer mit darin angeordneter angetriebener Rolle;
Fig. 4 eine vereinfache vergrösserte Schnittdarstellung eines mit der Wandung des Rohrkörpers verbundenen Dosierelementes.

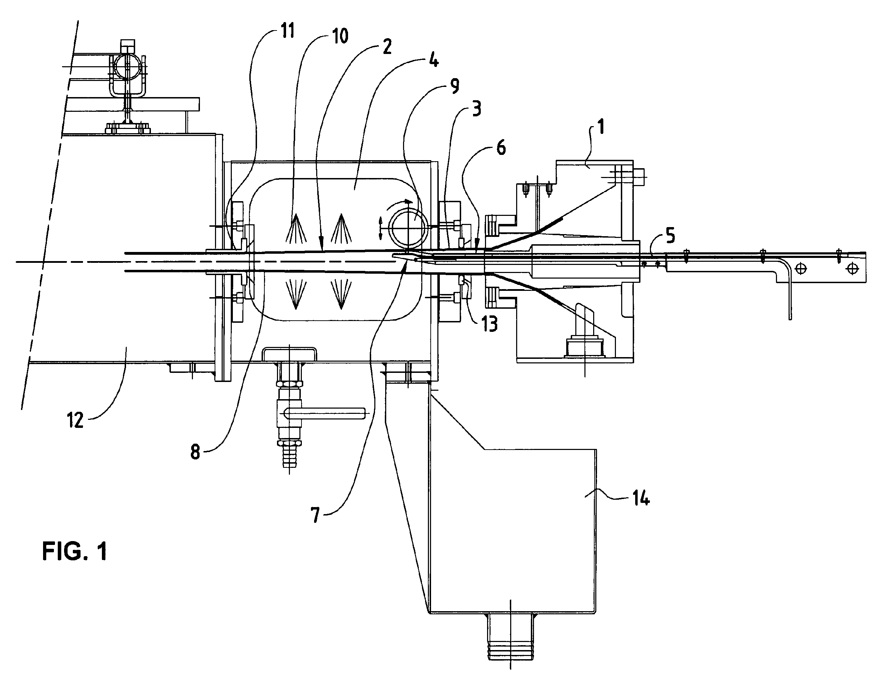

Aus Fig. 1 ist ein Teil der Produktionseinrichtung ersichtlich, mit welcher die Tropfbewässerungsrohre nach dem erfindungsgemässen Verfahren hergestellt werden können. Dabei ist die Extrusionsvorrichtung 1 dargestellt, mit welcher der Rohrkörper 2 in bekannter Weise fortlaufend extrudiert wird. Das extrudierte Material ist ein thermoplastischer Kunststoff, beispielsweise Polyäthylen. Dieser Rohrkörper 2 gelangt über eine Eintrittsöffnung 3 in eine Vorkühlkammer 4.

In den Rohrkörper 2 werden über eine Führungsbahn 5 in bekannter Weise Dosierelemente 6 eingeführt. Hierbei können die Dosierelemente 6 in bekannter Weise beispielsweise über einen mechanischen Schieber auf der Führungsbahn 5 vorgeschoben werden, es sind auch andere Zuführungssysteme bekannt, mit welchem Dosierelemente 6 vorgeschoben werden können, beispielsweise durch Luftdüsen.

Der Endbereich 7 der Führungsbahn 5 ist so ausgestaltet, dass in diesem Bereich die Dosierelemente 6 mit der Innenseite der Wandung 8 des Rohrkörpers 2 in Kontakt kommen, mit dem fortlaufenden Rohrkörper 2 mitgenommen werden und durch den Endbereich 7 und einer in der Vorkühlkammer 4 angeordneten, aussenliegenden, die Aussenseite der Wandung 8 des Rohrkörpers 2 abstützende Rolle 9 an die noch weiche Wandung 8 angepresst und mit dieser verschweisst werden.

In der Vorkühlkammer 4 wird der Rohrkörper 2 vorgekühlt, was beispielsweise durch ein Besprühen des Rohrkörpers 2 mit einem Kühlmittel 10 erfolgen kann, wie dies in Fig. 1 schematisch dargestellt ist. Die Vorkühlung kann auch dadurch erfolgen, dass die Vorkühlkammer 4 mit dem Kühlmittel gefüllt ist und der Rohrkörper 2 das so gebildete Kühlbad durchläuft.

Aus der Vorkühlkammer 4 gelangt der Rohrkörper 2 über eine Kalibriervorrichtung 11 in eine Hauptkühlkammer 12. Durch die Kalibriervorrichtung 11 wird der Rohrkörper in bekannter Weise auf seinen endgültigen Durchmesser kalibriert, in der nachfolgenden Hauptkühlkammer 12 wird der Rohrkörper weiter abgekühlt. In dieser Hauptkühlkammer 12 herrscht vorteilhafterweise ein Unterdruck, wodurch vermieden wird, dass der Rohrkörper 2 in sich zusammen fällt. Durch diesen Unterdruck wird auch erreicht, dass die Abdichtung zwischen Kalibriervorrichtung 11 und durchlaufenden Rohrkörper 2 vollständig ist.

Der so abgekühlte und verfestigte Rohrkörper wird danach in eine nicht dargestellte Zugeinrichtung geleitet, mit welcher der Rohrkörper vorgeschoben wird, gelangt dann in bekannter Weise in eine Bohreinrichtung, in welcher die Wandung des Rohrkörpers im Bereich des Dosierelementes an der richtigen Stelle mit einer durchgehenden Bohrung ausgestattet wird, das so fertig gestellte Tropfbewässerungsrohr kann dann beispielsweise auf einer Wickelvorrichtung aufgewickelt werden.

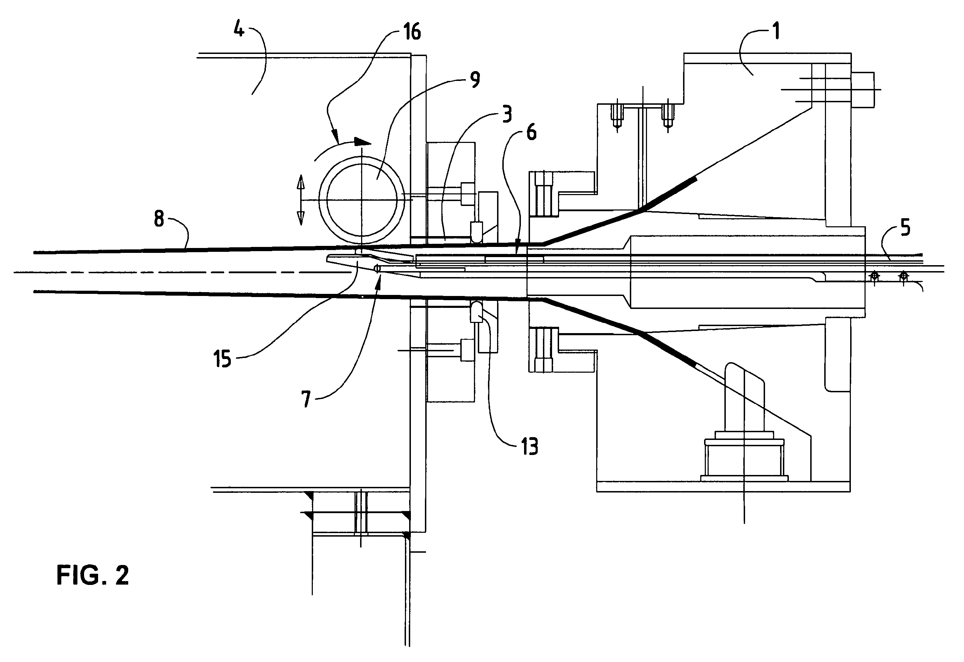

Wie insbesondere in der vergrösserten Darstellung gemäss Fig. 2 ersichtlich ist, gelangt der frisch extrudierte Rohrkörper 2 über die Eintrittsöffnung 3 in die Vorkühlkammer 4. Die Eintrittsöffnung 3 weist hierbei über ihre gesamte Länge einen Durchmesser auf, der grösser ist als der Durchmesser des extrudierten Rohrkörpers 2, so dass der Rohrkörper 2 nicht in Kontakt kommt mit der Eintrittsöffnung 3. In die Eintrittsöffnung 3 ist eine Lippendichtung 13 eingesetzt, die praktisch keinen Anpressdruck auf den extrudierten Rohrkörper 2 ausübt und mit welcher die Vorkühlkammer 4 abgedichtet wird. Die Abdichtung ist aber so, dass durch diese Eintrittsöffnung 3 trotzdem Kühlmittel austreten kann, dieses Kühlmittel wird durch ein Auffangbecken 14 aufgefangen, das unterhalb der Eintrittsöffnung 3 angeordnet ist, das so gesammelte Kühlmittel kann wieder in den Kühlmittelkreislauf der Einrichtung zurück geführt werden.

Wie bereits erwähnt worden ist, ist der Endbereich 7 der Führungsbahn 5 so ausgebildet, dass das zugeführte Dosierelement 6 mit der Wandung 8 des extrudierten Rohrkörpers 2 in Kontakt kommt. Der Endbereich 7 der Führungsbahn 5 weist einen weiteren Bereich 15 auf, welcher im Wesentlichen parallel zur Wandung 8 des Rohrkörpers 2 ausgerichtet ist, und mit welchem das Dosierelement 6 gegen die Wandung 8 des Rohrkörpers 2 gepresst wird. Gegenüber diesem weiteren Bereich 15 der Führungsbahn 5 ist aussenseitig der Wandung 8 des Rohrkörpers 2 die Rolle 9 angeordnet. Somit wird das jeweilige Dosierelement 6 über diesen weiteren Bereich 15 der Führungsbahn 5 und der Rolle 9 an die Innenseite der Wandung 8 angepresst und mit dieser verbunden beziehungsweise verschweisst.

Die Rolle 9 ist antreibar, wie dies durch Pfeil 17 dargestellt ist, wodurch der Widerstand zum Anpressen der jeweiligen Dosierelemente 6 an die Wandung 8 des Rohrkörpers 2 möglichst gering gehalten werden kann. Selbstverständlich entspricht die Umfangsgeschwindigkeit der Rolle 9 der Vorschubgeschwindigkeit des extrudierten Rohrkörpers 2. Der Abstand zwischen der Rolle 9 und dem weiteren Bereich 15 der Führungsbahn 5 lässt sich einstellen, was beispielsweise in bekannter Weise durch Anheben und Absenken der Rolle 9, dargestellt durch den Doppelpfeil 17, vorgenommen werden kann. Selbstverständlich wäre auch denkbar, den Endbereich 7 der Führungsbahn 5 verstellbar auszugestalten, es wäre auch möglich, sowohl die Rolle 9 und auch den Endbereich 7 der Führungsbahn 5 verstellbar zu gestalten, wodurch auch eine Anpassung an unterschiedliche Durchmesser des Rohrkörpers, wenn beispielsweise die Austrittdüse der Extrusionsvorrichtung ausgewechselt würde, ermöglicht würde.

Das Zusammenfügen und Anpressen der Dosierelemente 6 an die Innenseite der Wandung 8 erfolgt somit ausschliesslich zwischen dem weiteren Bereich 15 und der Rolle 9, wodurch eine optimale Verbindung gewährleistet ist, da der Rohrkörper in diesem Bereich noch relativ weich ist und eine entsprechend hoheTemperatur aufweist. Wegen der Weichheit des Rohrkörpers 2 in diesem Bereich wird auch darauf verzichtet, beispielsweise die Rolle 9 mit einem vorgegebenen Anpressdruck an den Rohrkörper 2 anzupressen, da man dadurch die Eintrittstiefe des Dosierelementes 6 in den Rohrkörper 2 nicht kontrollieren könnte.

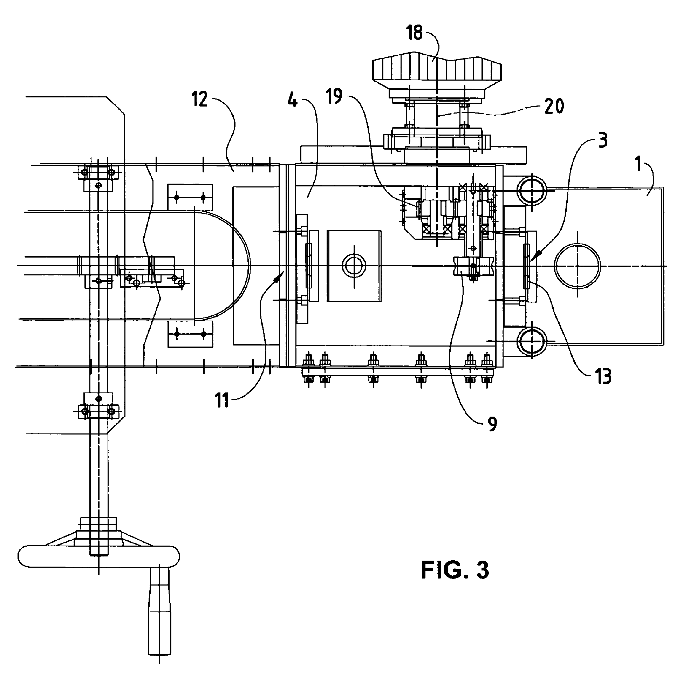

Aus der Draufsicht gemäss Fig. 3 ist das Auffangbecken 14, die Eintrittsöffnung 3, die Vorkühlkammer 2, die Kalibriervorrichtung 11 und die Hauptkühlkammer 12 ersichtlich. Innerhalb der Vorkühlkammer 4 ist die Rolle 9 angeordnet, der Antrieb erfolgt in bekannter Weise über einen Elektromotor 17 und ein Getriebe 19. Die Verstellung der Rolle 9 zum Einstellen des Abstandes vom weiteren Bereich 15 (Fig. 2) der Führungsbahn kann beispielsweise dadurch erfolgen, dass das Getriebe 19 in bekannter Weise um die Antriebsachse 20 des Elektromotors 18 verschwenkt wird.

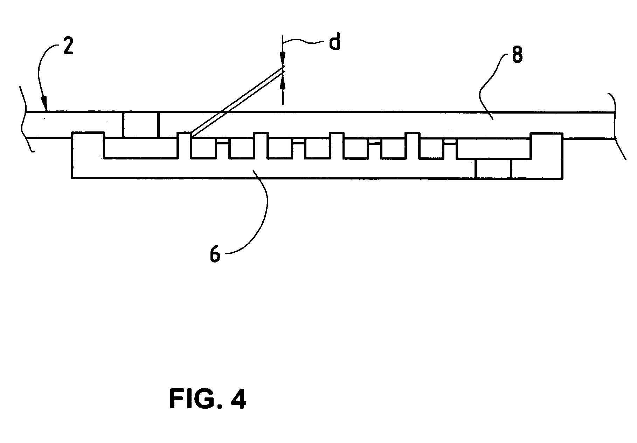

Aus Fig. 4 ist in vereinfachter Weise und vergrössert die Verbindung eines Dosierelementes 6 mit der Wandung 8 des Rohrkörpers 2 dargestellt. Durch die Einstellung des Abstandes zwischen dem Endbereich 7 der Führungsbahn 5 und der Rolle 9, wie dies zu Fig. 2 beschrieben worden ist, kann die Eindringtiefe d des Dosierelementes 6 in die Wandung 8 des Rohrkörpers 2 eingestellt werden. Dadurch erhält man während eines Herstellvorgangs über die gesamte Länge eines Tropfbewässerungsrohres eine gleich bleibende Verbindungsqualität zwischen Dosierelementen 6 und Rohrkörper 2. Je nach Dicke der Wandung 2 und eingesetztem Dosierelement kann diese Eindringtiefe d auf etwa 2% bis 50% der Dicke der Wandung 8 des Rohrkörpers 2 festgelegt werden.

Mit diesem erfindungsgemässen Verfahren zur Herstellung von Tropfbewässerungsrohren erhält man eine optimale Verbindungsqualität zwischen Dosierelementen und extrudiertem Rohrkörper, unabhängig davon welche Art von Dosierelementen verwendet wird und wie dick die Wandung des Rohrkörpers ist. Eine gleichbleibende optimale Qualität der Verbindungen zwischen Dosierelementen und Rohrkörper ist gewährleistet.

## Patentansprüche

1. Verfahren zum Herstellen von Tropfbewässerungsrohren, bei welchem ein Rohrkörper (2) durch einen Extrusionsvorgang eines thermoplastischen Kunststoffs hergestellt wird, welcher Rohrkörper (2) kalibriert und abgekühlt wird und in welchen Rohrkörper (2) Dosierelemente (6) mit einem Abstand voneinander eingesetzt, an die Wandung (8) des Rohrkörpers (2) angepresst und mit dieser verschweisst werden, und welcher Rohrkörper (2) durch eine Bohreinrichtung geführt wird, in welcher im Bereich der Dosierelemente (6) jeweils die Wandung (8) durchbohrt wird, wobei der aus der Extrusionsvorrichtung (1) austretende extrudierte Rohrkörper (2) in eine Vorkühlkammer (4) geleitet wird, in welcher der Rohrkörper (2) vorgekühlt wird und in welchem die Dosierelemente (6) mit der Wandung (8) verbunden und vollständig angepresst werden, und der Rohrkörper (2) durch eine Kalibriervorrichtung (11) geleitet und auf den Enddurchmesser kalibriert wird und in die Hauptkühlkammer (12) gelangt, in welcher der Rohrkörper (2) weiter abgekühlt wird, **dadurch gekennzeichnet, dass** der aus der Extrusionsvorrichtung (1) austretende extrudierte Rohrkörper (2) direkt, unkalibriert und kontaktlos durch die Eintrittsöffnung (3) in die Vorkühlkammer (4) eingeführt wird.

2. Verfahren nach Anspruch 1, **dadurch gekennzeichnet, dass** die Dosierelemente (6) über eine Führungsbahn (5) in den Rohrkörper (2) eingeführt werden und dass die Dosierelemente (6) durch den Endbereich (7) der Führungsbahn (5) und eine die Aussenseite der Wandung (8) abstützende Rolle (9) an die Wandung (8) angepresst werden.

3. Verfahren nach Anspruch 2, **dadurch gekennzeichnet, dass** durch Einstellen des Abstandes zwischen dem Endbereich (7) der Führungsbahn (5) und der abstützenden Rolle (9) die Eindringtiefe (d) des Dosierelementes (6) in die Wandung (8) des Rohrkörpers (2) festgelegt wird.

4. Verfahren nach Anspruch 3, **dadurch gekennzeichnet, dass** die Eindringtiefe (d) des Dosierelementes (6) in die Wandung (8) des Rohrkörpers (2) auf 2% bis 50% der Dicke der Wandung (8) festgelegt wird.

5. Verfahren nach einem der Ansprüche 1 bis 4, **dadurch gekennzeichnet, dass** in der Vorkühlkammer (4) das Kühlmittel (10) auf den Rohrkörper (2) aufgesprüht wird.

6. Verfahren nach einem der Ansprüche 1 bis 4, **dadurch gekennzeichnet, dass** in der Vorkühlkammer (4) das Kühlmittel (10) ein Bad bildet, welches durch den Rohrkörper (2) durchlaufen wird.

7. Verfahren nach Anspruch 5 oder 6, **dadurch gekennzeichnet, dass** das aus der Eintrittsöffnung (3) der Vorkühlkammer (4) austretende Kühlmittel durch ein Auffangbecken (14) aufgefangen wird.

8. Verfahren nach einem der Ansprüche 2 bis 7, **dadurch gekennzeichnet, dass** die die Aussenseite der Wandung (8) abstützende Rolle (9) angetrieben wird.

9. Verfahren nach einem der Ansprüche 1 bis 8, **dadurch gekennzeichnet, dass** in der Vorkühlkammer (4) Umgebungsdruck herrscht und in der Hauptkühlkammer (12) ein Unterdruck angelegt wird.

## Claims

1. Method for production of drip irrigation tubes, in which a tube body (2) is produced through a step of extrusion of a thermoplastic synthetic material, which tube body (2) is formed to size and cooled off and in which tube body (2) metering elements (6) with a spacing apart from one another are inserted, are pressed onto the walling (8) of the tube body (2) and are welded together therewith, and which tube body (2) is led through a drilling device, in which the walling (8) is drilled through in the area of each of the metering elements (6), the extruded tube body (2) exiting the extrusion device (1) being led into a pre-cooling chamber (4) in which chamber the tube body (2) is precooled and in which tube body the metering elements (6) are connected to the walling (8) and are completely pressed thereon, and the tube body (2) is led through a sizing device (11) and is formed to the final diameter and arrives in the main cooling chamber (12) in which the tube body (2) is further cooled down, **characterised in that** the extruded tube body (2) exiting the extrusion device (1) is led directly, in an unsized and non-contacting way through the inlet aperture (3) into the pre-cooling chamber (4).

2. Method according to claim 1, **characterized in that** the metering elements (6) are inserted into the tube body (2) via a guideway (5) and **in that** the metering elements (6) are pressed onto the walling (8) by the end region (7) of the guideway (5) and a roller (9) supporting the exterior of the walling (8).

3. Method according to claim 2, **characterized in that** the depth of penetration (d) of the metering elements (6) in the walling (8) of the tube body (2) is defined by adjustment of the spacing apart between the end region (7) of the guideway (5) and the supporting roller (9).

4. Method according to claim 3, **characterized in that** the depth of penetration (d) of the metering element (6) in the walling (8) of the tube body (2) is defined at 2% to 50% of the thickness of the walling (8).

5. Method according to one of the claims 1 to 4, **characterized in that** in the pre-cooling chamber (4) the coolant (10) is sprayed on the tube body (2).

6. Method according to one of the claims 1 to 4, **characterized in that** in the pre-cooling chamber (4) the coolant (10) forms a bath, which is passed through by the tube body (2).

7. Method according to claim 5 or 6, **characterized in that** the coolant emerging through the inlet aperture (3) of the pre-cooling chamber (4) is collected by a catch basin (14).

8. Method according to one of the claims 2 to 7, **characterized in that** the roller (9) supporting the exterior of the walling (8) is driven.

9. Method according to one of the claims 1 to 8, **characterized in that** ambient pressure predominates in the pre-cooling chamber (4) and a low pressure is created in the main cooling chamber (12).

## Revendications

1. Procédé de fabrication de tuyaux d'irrigation goutte à goutte (9), où un corps tubulaire (2) est fabriqué par une opération d'extrusion d'une matière thermoplastique, corps tubulaire (2) qui est calibré et refroidi et corps tubulaires (2) dans lesquels sont introduits à distance les uns des autres des éléments de dosage (6), lesquels sont pressés et soudés à la paroi (8) du corps tubulaire (2), et corps tubulaire (2) qui est guidé par un dispositif de perçage dans lequel est percée la paroi (8) respectivement dans la zone des éléments de dosage (6), le corps tubulaire extrudé (2) sortant du dispositif d'extrusion (1) étant amené dans une chambre de prérefroidissement (4), dans laquelle le corps tubulaire (2) est prérefroidi et où les éléments de dosage (6) sont reliés et complètement pressés avec la paroi (8), et le corps tubulaire (2) est amené à travers un dispositif de calibrage (11) et qui est calibré sur le diamètre d'extrémité et parvient dans la chambre principale de refroidissement (12), chambre dans laquelle le corps tubulaire (2) sortant du dispositif d'extrusion (1) est introduit directement non calibré et sans contact à travers l'ouverture d'entrée (3) dans la chambre de prérefroidissement (4).

2. Procédé selon la revendication 1, **caractérisé en ce que** les éléments de dosage (6) sont introduits dans le corps tubulaire (2) par une bande de guidage (5) et **en ce que** les éléments de dosage (6) sont pressés contre la paroi (8) par la zone d'extrémité (7) de la bande de guidage (5) et un galet (9) soutenant la face externe de la paroi (8).

3. Procédé selon la revendication 2, **caractérisé en ce que** la profondeur de pénétration (d) de l'élément de dosage (6) est déterminée dans la paroi (8) du corps tubulaire (2) par réglage de la distance entre la zone d'extrémité (7) de la bande de guidage (5) et du galet d'appui (9).

4. Procédé selon la revendication 3, **caractérisé en ce que** la profondeur de pénétration (d) de l'élément de dosage (6) est déterminée dans la paroi (8) du corps tubulaire (2) de 2 à 50 % de l'épaisseur de la paroi (8).

5. Procédé selon l'une des revendications 1 à 4, **caractérisé en ce que** dans la chambre de prérefroidissement (4), le réfrigérant (10) est pulvérisé sur le corps tubulaire (2).

6. Procédé selon l'une des revendications 1 à 4, **caractérisé en ce que** dans la chambre de prérefroidissement, le réfrigérant (10) forme un bain qui est traversé par le corps tubulaire (2).

7. Procédé selon la revendication 5 ou 6, **caractérisé en ce que** le réfrigérant sortant par l'ouverture d'entrée (3) de la chambre de prérefroidissement (6) est collectée par un bac de récupération (14).

8. Procédé selon l'une des revendications 2 à 7, **caractérisé en ce que** le galet (9) soutenant la face externe de la paroi (8) est entraîné.

9. Procédé selon l'une des revendications 2 à 7, **caractérisé en ce qu'**il règne dans la chambre de prérefroidissement (4) une pression environnante et qu'il est appliqué dans la chambre de refroidissement principale (12) une dépression.
